# EUROPEAN PATENT SPECIFICATION

(11) **EP 0 594 258 B1**
(45) Date of publication and mention of the grant of the patent: **07.01.1999**
(21) Application number: 93202944.0
(22) Date of filing: 20.10.1993
(51) Int. Cl.: A23C 19/16, A23P 1/08, A23D 7/00

(54) **Method for coating foodstuffs with an edible emulsion**
Verfahren zum Beschichten von Nahrungsmitteln mit einer essbaren Emulsion
Methode pour enrober des produits alimentaires avec une émulsion comestible

(30) Priority: 20.10.1992 NL 9201820
(43) Date of publication of application: 27.04.1994
(73) Proprietor: Friesland Brands B.V., 8937 AC Leeuwarden (NL)
(72) Inventor: van Arem, Everhardus Jacobus Franciscus, NL-8802 CR Franeker (NL); Hup, Gerhard, NL-8921 TX Leeuwarden (NL)
(74) Representative: Smulders, Theodorus A.H.J., Ir.

(56) References cited:
- EP-A- 0 340 857
- EP-A- 0 402 987
- EP-A- 0 471 558
- US-A- 3 323 922
- US-A- 4 992 284
- PATENT ABSTRACTS OF JAPAN vol. 011, no. 290 (C-447)18 September 1987 & JP-A-62 083 846 (MIYOSHI OIL & FAT) 17 April 1987
- Additifs et auxiliaires de fabrication dans les industries agro-alimentaires, pp.15

## Description

This invention relates to a method for coating a foodstuff with an edible emulsion, as well as to a foodstuff provided with a coating formed from such an emulsion.

European patent application 0 471 558 discloses an edible film which forms a moisture barrier and which can be applied as a packaging material, for instance for foodstuffs, or as an edible barrier between foodstuff components of differing water contents. This film comprises 74-95% of a lipid component in the form of droplets dispersed in 5-26% of an edible biopolymer. The total water content in the film is lower than 5 wt.%. The films described can be prepared by casting an emulsion containing said lipid component and the biopolymer in water and allowing it to dry.

Dutch patent application 9002273 discloses an edible material for covering or coating foodstuffs such as pâtés, pastes and types of sausage such as the so-called Berliner liver sausage and liver paste sausage. The material comprises 10-50% fat, 35-70% milk and/or water, 10-30% animal protein, 0-15% binder and/or thickener and 0-5% salt, in particular nitrite salt. This material serves to replace the layer of back fat traditionally utilized in these products and accordingly has a fairly large thickness, in particular a thickness of a number of millimeters. It is prepared by processing the ingredients into a paste at elevated temperature, subjecting this paste to a shaping operation and cooling it. Thus, a layered material is formed which is supple and elastic of structure and has a white color. The material can subsequently be applied to or around a foodstuff.

U.S. Patent 3,434,843 discloses a block-shaped foodstuff consisting of an external and an internal phase. The external phase is substantially formed by a homogeneous dispersion of a hydrophilic film former, for instance sodium caseinate, an edible humectant in an amount of 1-70 parts by weight per 10 parts by weight of film former, and 1-30 parts by weight of water per 10 parts by weight of film former. The internal phase is formed by small oil or fat globules. Per 10 parts by weight of film former, 1-150 parts by weight of fat can be included. In order to obtain a stable dispersion, a relatively large amount of humectant, for instance glycerine, glycol, invert sugar, carbohydrate hydrolysate, must be added. The food block, to which additional nutritional components, for instance vitamins, can be added, has a maximum nutritional value. The target group for the product are campers, servicemen and astronants.

EP-A-0 402 987 and EP-A-0 340 857 relate to a simulated cheese product and to a spread, and in particular to a cheese spread, respectively. More in particular, EP-A-0 402 987 relates to a low-calory simulated cheese product comprising 5-50% protein; 30-80% water; 0.2-4% cheese flavors; 0.2-3% emulsifying salt; 0.05-2% acidulant and 4-35% of particular low-calory fatty substances.

EP-A-0 340 857 teaches a process for preparing a spreadable oil-in-water emulsion having a fat content of 5-45 wt.%; a solids content of the aqueous phase of 15-50 wt.%; and 1-4 wt.% melting salts. It is required that at least 30% of the solids of the aqueous phase consists of non-fat milk solids; that the content of the milk-derived protein in the aqueous phase is 8-20 wt.% and that at least 5 but less than 50 wt.% of the milk-derived protein derives from whey-protein concentrates.

The object of the present invention is to provide an edible coating for foodstuffs, which can be applied in any desired thickness in a simple manner.

Surprisingly, it has been found that an aqueous emulsion containing protein, fat or oil as well as melting salts can be applied to a foodstuff in simple manner and subsequently forms a suitable coating thereon.

More in detail the present invention relates to a method for coating a foodstuff, wherein an edible emulsion comprising (a) 60-80 wt.% water, (b) 2-25 wt.% oil or fat, (c) 4-25 wt.% protein and (d) 0.1-3 wt.% melting salt is applied to the foodstuff and the emulsion coating is subsequently allowed to dry.

Preferably, the edible emulsion used according to the invention comprises: (a) 65-75 wt.% water, (b) 10-20 wt.% oil or fat, (c) 10-20 wt.% protein and (d) 1-2 wt.% melting salt.

The protein/fat ratio in the emulsion used according to the invention is preferably between 2:1 and 1:2.

The emulsion referred to allows ready processing like a normal emulsion and can be applied to a foodstuff in different manners. By modifying the properties of the emulsion, a sealing layer of any desired thickness can be applied.

More particularly, the melting salts exhibit a stabilizing activity in the watery emulsion. The emulsion used according to the invention is eminently processable by virtue of its low viscosity.

In contrast with the use of the film according to the above-mentioned European patent specification 0 471 558 or of the relatively thick layer according to the above-mentioned Dutch patent application for packing a foodstuff, a perfectly sealed layer can be provided around that foodstuff with the emulsion according to the invention. The inclusion of air between the sealing layer and the foodstuff can be completely prevented. Further, it is not a problem that more than 5 wt.% water is present during the coating of the foodstuff, which does present a problem in the film according to the European patent specification referred to.

Both the starting dispersion according to the above-mentioned U.S. Patent 3,434,843 and that according to European patent application 0 471 558 and the starting paste according to Dutch patent application 9002273 must meet such requirements as to enable the formation of a solid and stable product, a block or a film or a thick layer, respectively. The emulsion according to the invention need not meet such requirements; it is sufficient if the emulsion as such is stable and that it forms a sealing layer on a foodstuff. It is not necessary that the emulsion itself forms a stable film, for instance because it is to be removed later, as the emulsion layer can be eaten without any objection.

Further, U.S. Patent No. 3,323,922 discloses an emulsion utilized as a coating for edible food products. This emulsion consists of a film forming substance, a plasticizer and a liquid material immiscible in the plasticizer. As film forming compound, for instance caseinates can be used. One of the plasticizers mentioned is water, whilst oils and fats are mentioned as liquid material immiscible in the plasticizer. To form a stable emulsion, the amount of plasticizer, for instance water, must be as low as possible. Emulsions comprising 60-80 wt.% water and emulsions comprising melting salts are neither disclosed nor suggested in this publication.

In the emulsion used according to the invention, all conventional melting salts known to the skilled worker in this branch of the art can be used. Preferably, the melting salt is a sodium, potassium, or calcium salt of citric acid or orthophosphoric acid, or a diphosphate, a triphosphate or a polyphosphate of sodium or potassium or a mixture of these salts. Mixtures of melting salts are commercially known under the brand names of Joha® (BK Ladenburg), Solva® (Giulini Chemie GmbH), Self® (Chemische Fabrik Budenheim) and Kasomel® (Rhône-Poulenc). In " Additifs et Auxiliaires de fabrication dans les industries agro-alimentaires", p.15, citric acid is mentioned as melting salt.

The pH of the coating can be set to a certain extent by the choice of the type of melting salt. In addition, use can be made of particular types of acidulants, such as lactic acid, citric acid, orthophosporic acid, acetic acid, sodium hydrogen carbonate and/or calcium carbonate. These acidulants can partly take the place of the melting salt used. The pH range for the coating naturally depends on the foodstuff to be coated. Typically, the pH varies between 5.0 and 7.0.

The oil or fat fraction used is chosen from the edible solid or liquid oil and fat types or mixtures thereof. Suitable solid oils or fats are coconut oil, palm oil, hardened sunflower oil, for instance Trisun® HB 85 and Trisun® HB 95, or mixtures thereof. Examples of edible liquid oil types include peanut oil, soybean oil, sunflower oil, Trisun 80 (a sunflower oil rich in monosaturated fatty acids), butter oil or mixtures thereof.

The protein to be used serves as emulsifier. Many possible emulsifier proteins are known to the skilled worker. Thus, advantageously, a milk protein or soybean protein can be used. Preferably, the protein is a casein protein, preferably a sodium, potassium, or calcium caseinate, acid casein, rennet cases or a mixture thereof. Most preferred is sodium caseinate.

By a proper choice of the protein, oil or fat and melting salt fraction, in most cases an emulsion can be prepared which only contains substances which are also present in the foodstuff to be coated.

To the emulsion used according to the invention additives can be added. This addition can be effected prior to, during or after preparation. Thus, common salt, as well as coloring, aromatic and flavoring substances and/or preservatives can be added. If the emulsion according to the invention is applied to cheese, it is for instance possible to add one of the coloring substances β-carotene, bixin or norbixin.

The emulsion used according to the invention can suitably be prepared in any known manner. It is for instance possible to dissolve the melting salt in the water, to subsequently emulsify the protein in the aqueous solution with vigorous mixing, to add the oil or the fat, to stepwise heat the mixture obtained to 80°C with stirring, to vigorously mix it until a smooth emulsion is formed, and finally to cool this smooth emulsion. The heating step with stirring can suitably be carried out with the aid of microwaves.

Emulsifying the protein in the aqueous solution can be effected *inter alia* by the use of a mixer. To obtain a stable emulsion from the fat fraction and the protein-water solution, it is further possible to homogenize under pressure or utilizing strong shear forces.

The invention further relates to a method for coating a foodstuff, characterized in that the above-described emulsion is applied to the foodstuff to be coated and the emulsion coating is subsequently allowed to dry.

Generally, an emulsion is used such that, after drying, the content of melting salt varies from 0.3 to 9 wt.%, the content of oil or fat varies from 5 to 75 wt.%, the content of protein varies from 12 to 75 wt.%, while the water content varies between 5 and 15 wt.%, all weight percentages being calculated on the weight of the total coating.

Preferably, an emulsion is used such that, after drying, the melting salt content varies from 3 to 6 wt.%, the oil or fat content varies from 30 to 60 wt.%, the protein content varies from 30 to 60 wt.%, while the water content is 10 wt.%, all weight percentages being calculated on the weight of the total coating.

A foodstuff can be coated in different manners. In addition to simply applying the emulsion manually and spreading it with the aid of, for instance, a sponge or the like, the emulsion can also be applied mechanically in thin layers. Many foodstuffs are provided with a synthetic layer. Thus, cheese is mechanically plasticized. For a mechanical application of the coating according to the invention, the emulsion can be suitably processed on a cheese plasticizer with felt flaps.

According to a very simple method, the emulsion is applied by dipping the foodstuff in an emulsion bath. Further, the emulsion can be applied by brushing, spraying or pouring.

The layer thickness and strength of the ultimate coating can be influenced in different manners. Thus, the composition of the emulsion can be adapted to the requirements of the coating. It is for instance possible to adjust the thickness of the layer by varying the viscosity of the emulsion or by repeating the application of the emulsion a number of times. In this last case, it is also possible to apply emulsion layers of different compositions and for different purposes.

The emulsion according to the invention is generally applied at a temperature between 10-80°C. Applying the emulsion at a higher temperature than room temperature creates the possibility of applying even thinner layers.

The emulsion is dried after its application. Although this drying step can be accelerated in known manners, the foodstuff is normally dried in air in conventional manner.

After the drying of the coating, the coated foodstuff can be subjected to an after treatment to enhance the mechanical properties of the coating. In this treatment, the protein molecules in the coating are crosslinked. Suitable after treatment substances are glutaraldehyde and liquid smoke.

Finally, the invention relates to a coated foodstuff obtained by the method of the invention.

The coating used according to the invention is highly suitable for coating all kinds of foodstuffs that need additional protection, for instance against microbial influences or light. Plastic foodstuffs in particular, such as cheese or sausage, need an additional protective layer. Preferably, the foodstuff coated with the emulsion according to the invention is cheese.

The invention will now be further explained in and by the following examples.

### Example 1:

In a mixing bowl with 1020 g water, 30 g Joha®S4 melting salt were dissolved. Then 150 g sodium caseinate were emulsified in this solution with the aid of a Braun® rod mixer. 300 g Trisun HB 95 ® modified sunflower oil were added. In a microwave oven the mixture was stepwise heated to 80°C with stirring and subsequently subjected to the action of a rod mixer until a smooth emulsion was obtained. After cooling, the emulsion could be stored until the time of application of this emulsion to a foodstuff.

### Example 2:

The emulsion prepared in Example 1 was manually applied to cheese in a thin layer using a sponge. After the application of the coating, the cheese was dried in the air of a cheese store in conventional manner. The coating with the emulsion according to the invention gave the cheese sufficient protection against external influences and did not have to be removed for consumption.

### Example 3:

In a melting machine known in the processed cheese industry (Stephan®, capacity 80 liters) an emulsion was prepared with the following composition: 11 wt.% peanut oil, 11 wt.% sodium caseinate, 1.8 wt.% melting salt Joha C®, 2.2 wt.% common salt and 74 wt.% water.

The finished emulsion was packaged in plastic buckets with lids and stored under cheese store conditions.

The emulsion was used to regularly treat a batch of cheese in a manner known from the cheese plastic treatment. Using a sponge, a number of layers of emulsion were manually applied to the cheeses. These cheeses were regularly turned and followed up to an age of three months. The drying process proved to proceed in accordance with the drying process of conventionally coated cheeses. In spite of the fact that the conventional antifungal agent natamycin had not been added to the coating layer, no fungoid growth on the cheese proved to be observable after three months.

## Claims

1. A method for coating a foodstuff, wherein an edible emulsion, comprising (a) 60-80 wt.% water, (b) 2-25 wt.% oil or fat, (c) 4-25 wt.% protein and (d) 0.1-3 wt.% melting salt, is applied to the foodstuff and the emulsion coating is subsequently allowed to dry.

2. The method according to claim 1, wherein the edible emulsion comprises (a) 65-75 wt.% water, (b) 10-20 wt.% oil or fat, (c) 10-20 wt.% protein and (d) 1-2 wt.% melting salt.

3. The method according to claim 1 or 2, wherein the protein to fat ratio in the edible emulsion varies between 2:1 and 1:2.

4. The method according to any one of the preceding claims, wherein the melting salt is a sodium, potassium or calcium salt of citric acid or orthophosphoric acid, or a diphosphate, a triphosphate or a polyphosphate of sodium or potassium, or a mixture of these salts.

5. The method according to any one of the preceding claims, wherein the oil or the fat is chosen from the edible solid types of oil and fat or mixtures thereof.

6. The method according to any one of the preceding claims, wherein the oil or the fat is chosen from coconut oil, palm oil, hardened sunflower oil or mixtures thereof.

7. The method according to any one of claims 1-4, wherein the oil is chosen from the edible liquid types of oil.

8. The method according to claim 7, characterized in that the oil is chosen from peanut oil, soybean oil, sunflower oil, butter oil or mixtures thereof.

9. The method according to any one of the preceding claims, wherein the protein is a milk protein or soybean protein.

10. The method according to any one of the preceding claims, wherein the protein is a casein protein.

11. The method according to any one of the preceding claims, wherein the protein is sodium, potassium or calcium caseinate, acid casein, rennet casein or a mixture thereof.

12. The method according to any one of the preceding claims, wherein the protein is sodium caseinate.

13. The method according to any one of the preceding claims, wherein common salt and/or coloring, aromatic and flavoring substances and/or preservatives are added.

14. The method according to any one of the preceding claims, wherein an emulsion is used such that, after drying, the melting salt content varies from 0.3 to 9 wt.%, the oil or fat content varies from 5 to 75 wt.%, the protein content varies from 12 to 75 wt.%, while the water content varies between 5 and 15 wt.%, all weight percentages being calculated on the weight of the total coating.

15. The method according to claim 14, wherein an emulsion is used such that, after drying, the melting salt content varies from 3 to 6 wt.%, the oil or fat content varies from 30 to 60 wt.%, the protein content varies from 30 to 60 wt.%, while the water content is 10 wt.%, all weight percentages being calculated on the weight of the total coating.

16. The method according to any one of the preceding claims, wherein the emulsion is applied by dipping the foodstuff in an emulsion bath.

17. The method according to any one of claims 1-15, wherein the emulsion is applied by means of brushing, spraying or pouring.

18. The method according to any one of the preceding claims, wherein the application of the emulsion is repeated a number of times.

19. The method according to claim 18, wherein emulsion layers of differing compositions are applied.

20. The method according to any one of the preceding claims, wherein the emulsion is applied at a temperature between 10 and 80°C.

21. The method according to any one of the preceding claims, wherein the coating is subjected to an after treatment in order to obtain a crosslinking between the protein molecules.

22. The method according to claim 21, wherein the coating is subjected to an after treatment with glutaraldehyde or liquid smoke.

23. A coated foodstuff obtained by the method according to any one of claims 1-22.

24. The foodstuff according to claim 23, which is a cheese.

## Patentansprüche

1. Verfahren zum Beschichten eines Nahrungsmittels, bei welchem eine eßbare Emulsion die (a) 60 bis 80 Gew.-% Wasser, (b) 2 bis 25 Gew.-% Öl oder Fett, (c) 4 bis 25 Gew.-% Protein und (d) 0,1 bis 3 Gew.-% Salzschmelze (melting salt) enthält, auf das Nahrungsmittel aufgebracht wird und die Emulsionsschicht anschließend getrocknet wird.

2. Verfahren nach Anspruch 1, gekennzeichnet durch (a) 65 bis 75 Gew.-% Wasser, (b) 10 bis 20 Gew.-% Öl oder Fett, (c) 10 bis 20 Gew.-% Protein und (d) 1 bis 2 Gew.-% Salzschmelze der eßbaren Emulsion.

3. Verfahren nach Anspruch 1 oder 2, dadurch gekennzeichnet, daß das Verhältnis von Protein zu Fett in der eßbaren Emulsion zwischen 2:1 und 1:2 variiert.

4. Verfahren nach zumindest einem der vorhergehenden Ansprüche, gekennzeichnet durch ein Natrium-, Kalium- oder Kalziumsalz der Zitronensäure oder Orthophosphorsäure oder ein Diphosphat, ein Natrium- oder Kalium-Triphosphat oder Natrium- oder Kalium-Polyphosphat, oder eine Mischung aus diesen Salzen als Salzschmelze.

5. Verfahren nach zumindest einem der vorhergehenden Ansprüche, dadurch gekennzeichnet, daß das Öl oder das Fett aus den festen Speiseölen oder -fetten oder aus Mischungen daraus ausgewählt wird.

6. Verharren nach zumindest einem der vorhergehenden Ansprüche, dadurch gekennzeichnet, daß das Öl oder das Fett aus Kokosnußöl, Palmöl, gehärtetem Sonnenblumenöl oder Mischungen daraus ausgewählt wird.

7. Verfahren nach zumindest einem der Ansprüche 1 bis 4, dadurch gekennzeichnet, daß das Öl aus den flüssigen Speiseölen ausgewählt wird.

8. Verfahren nach Anspruch 7, dadurch gekennzeichnet, daß das Öl aus Erdnußöl, Sojabohnenöl, Sonnenblumenöl, Butteröl oder Mischungen daraus ausgewählt wird.

9. Verfahren nach zumindest einem der vorhergehenden Ansprüche, dadurch gekennzeichnet, daß das Protein ein Milch- oder Sojabohnenprotein ist.

10. Verfahren nach zumindest einem der vorhergehenden Ansprüche, gekennzeichnet durch ein Kaseinprotein als das Protein.

11. Verfahren nach zumindest einem der vorhergehenden Ansprüche, dadurch gekennzeichnet, daß das Protein ein Natrium-, Kalium- oder Kalziumkaseinat, Säurekasein, Labkasein oder eine Mischung daraus ist.

12. Verfahren nach zumindest einem der vorhergehenden Ansprüche, dadurch gekennzeichnet, daß das Protein Natriumkaseinat ist.

13. Verfahren nach zumindest einem der vorhergehenden Ansprüche, dadurch gekennzeichnet, daß Kochsalz und/oder Farb-, Aroma- und Geschmacksstoffe und/oder Konservierungsstoffe hinzugefügt werden.

14. Verfahren nach zumindest einem der vorhergehenden Ansprüche, gekennzeichnet durch den Einsatz einer Emulsion in solcher Weise, daß nach dem Trocknen der Gehalt an Salzschmelze zwischen 0,3 und 9 Gew.-%, der Öl- oder Fettgehalt zwischen 5 und 75 Gew.-%, der Proteingehalt zwischen 12 und 75 Gew.-% variiert, während der Wassergehalt zwischen 5 und 15 Gew.-% variiert, wobei alle Gewichtsprozentsätze basierend auf dem Gewicht der gesamten Beschichtung errechnet werden.

15. Verfahren nach Anspruch 14, gekennzeichnet durch den Einsatz einer Emulsion in solcher Weise, daß nach dem Trocknen der Gehalt an Salzschmelze zwischen 3 und 6 Gew.-%, der Öl- oder Fettgehalt zwischen 30 und 60 Gew.-%, der Proteingehalt zwischen 30 und 60 Gew.-% variiert, während der Wassergehalt 10 Gew.-% beträgt, wobei alle Gewichtsprozentsätze basierend auf dem Gewicht der gesamten Beschichtung errechnet werden.

16. Verfahren nach zumindest einem der vorhergehenden Ansprüche, dadurch gekennzeichnet, daß die Emulsion durch Eintauchen des Nahrungsmittels in ein Emulsionsbad aufgebracht wird.

17. Verfahren nach zumindest einem der Ansprüche 1 bis 15, dadurch gekennzeichnet, daß die Emulsion mittels Bürsten, Sprühen oder Gießen aufgebracht wird.

18. Verfahren nach zumindest einem der vorhergehenden Ansprüche, dadurch gekennzeichnet, daß das Aufbringen der Emulsion mehrfach wiederholt wird.

19. Verfahren nach Anspruch 18, dadurch gekennzeichnet, daß Emulsionsschichten unterschiedlicher Zusammensetzungen aufgebracht werden.

20. Verfahren nach zumindest einem der vorhergehenden Ansprüche, dadurch gekennzeichnet, daß die Emulsion bei einer Temperatur von zwischen 10 und 80°C aufgebracht wird.

21. Verfahren nach zumindest einem der vorhergehenden Ansprüche, dadurch gekennzeichnet, daß die Beschichtung einer Nachbehandlung unterzogen wird, um eine Vernetzung zwischen den Proteinmolekülen zu erhalten.

22. Verfahren nach Anspruch 21, dadurch gekennzeichnet, daß die Beschichtung einer Nachbehandlung mit Glutaraldehyd oder flüssigem Rauch unterzogen wird.

23. Beschichtetes Nahrungsmittel, das mit Hilfe des Verfahrens nach wenigstens einem der Ansprüche 1 bis 22 erhalten wird.

24. Nahrungsmittel nach Anspruch 23, dadurch gekennzeichnet, daß es ein Käse ist.

## Revendications

1. Procédé d'enrobage de produits alimentaires, dans lequel on applique sur un produit alimentaire une émulsion comestible qui comporte
a) de 60 à 80 % en poids d'eau,
b) de 2 à 25 % en poids d'huile ou de matière grasse,
c) de 4 à 25 % en poids de protéines, et
d) de 0,1 à 3 % en poids de sel fondant,
puis on laisse sécher la couche d'émulsion.

2. Procédé conforme à la revendication 1, dans lequel l'émulsion comestible comporte
a) de 65 à 75 % en poids d'eau,
b) de 10 à 20 % en poids d'huile ou de matière grasse,
c) de 10 à 20 % en poids de protéines, et
d) de 1 à 2 % en poids de sel fondant.

3. Procédé conforme à la revendication 1 ou 2, dans lequel le rapport des protéines aux matières grasses dans l'émulsion comestible vaut de 2/1 à 1/2.

4. Procédé conforme à l'une des revendications précédentes, dans lequel le sel fondant est un sel de sodium, potassium ou calcium de l'acide citrique ou de l'acide orthophosphorique, ou un diphosphate, triphosphate ou polyphosphate de sodium ou de potassium, ou encore un mélange de ces sels.

5. Procédé conforme à l'une des revendications précédentes, dans lequel l'huile ou la matière grasse est choisie parmi les huiles et matières grasses comestibles solides et leurs mélanges.

6. Procédé conforme à l'une des revendications précédentes, dans lequel l'huile ou la matière grasse est choisie parmi l'huile de co-co, l'huile de palme, l'huile de tournesol durcie et leurs mélanges.

7. Procédé conforme à l'une des revendications 1 à 4, dans lequel l'huile est choisie parmi les huiles comestibles liquides.

8. Procédé conforme à la revendication 7, dans lequel l'huile est choisie parmi l'huile d'arachide, l'huile de soja, l'huile de tournesol, le beurre fondu clarifié et leurs mélanges.

9. Procédé conforme à l'une des revendications précédentes, dans lequel les protéines sont des protéines de lait ou des protéines de soja.

10. Procédé conforme à l'une des revendications précédentes, dans lequel les protéines sont des protéines de type caséine.

11. Procédé conforme à l'une des revendications précédentes, dans lequel les protéines sont du caséinate sodique, potassique ou calcique, de la caséine à l'acide ou de la caséine à la présure, ou un mélange de ces caséines.

12. Procédé conforme à l'une des revendications précédentes, dans lequel les protéines sont du caséinate sodique.

13. Procédé conforme à l'une des revendications précédentes, dans lequel on ajoute du sel commun et/ou des colorants, substances aromatiques, assaisonnements et/ou conservateurs.

14. Procédé conforme à l'une des revendications précédentes, dans lequel on utilise une émulsion telle que, après séchage, la teneur en sel fondant vaut de 0,3 à 9 % en poids, la teneur en huile ou matière grasse vaut de 5 à 75 % en poids et la teneur en protéines vaut de 12 à 75 % en poids, alors que la teneur en eau vaut de 5 à 15 % en poids, tous ces pourcentages pondéraux étant rapportés au poids total de la couche d'enrobage.

15. Procédé conforme à la revendication 14, dans lequel on utilise une émulsion telle que, après séchage, la teneur en sel fondant vaut de 3 à 6 % en poids, la teneur en huile ou matière grasse vaut de 30 à 60 % en poids et la teneur en protéines vaut de 30 à 60 % en poids, alors que la teneur en eau vaut 10 % en poids, tous ces pourcentages pondéraux étant rapportés au poids total de la couche d'enrobage.

16. Procédé conforme à l'une des revendications précédentes, dans lequel on applique l'émulsion en plongeant le produit alimentaire dans un bain d'émulsion.

17. Procédé conforme à l'une des revendications 1 à 15, dans lequel on applique l'émulsion au pinceau-brosse, par pulvérisation ou en la déversant.

18. Procédé conforme à l'une des revendications précédentes, dans lequel on effectue plusieurs opérations d'application d'émulsion.

19. Procédé conforme à la revendication 18, dans lequel on applique des couches d'émulsion de compositions différentes.

20. Procédé conforme à l'une des revendications précédentes, dans lequel on effectue l'application d'émulsion à une température de 10 à 80°C.

21. Procédé conforme à l'une des revendications précédentes, dans lequel on soumet la couche d'enrobage à un post-traitement pour provoquer la rétification des molécules de protéines.

22. Procédé conforme à la revendication 21 dans lequel on soumet la couche d'enrobage à un post-traitement réalisé avec du glutaraldéhyde ou de l'arôme de fumée liquide.

23. Produit alimentaire enrobé, obtenu selon un procédé conforme à l'une des revendications 1 à 22.

24. Produit alimentaire conforme à la revendication 23, qui est un fromage.
